# EUROPÄISCHE PATENTSCHRIFT

(11) **EP 1 997 699 B1**
(45) Veröffentlichungstag und Bekanntmachung des Hinweises auf die Patenterteilung: **26.10.2011**
(21) Anmeldenummer: 08103359.9
(22) Anmeldetag: 03.04.2008
(51) Int. Cl.: B60S 1/34, B60S 1/58

(54) **Scheibenwischereinrichtung in einem Kraftfahrzeug**
Windscreen wiper device in a motor vehicle
Dispositif d'essuie-glace dans un véhicule automobile

(30) Priorität: 30.05.2007 DE 102007025267; 17.12.2007 DE 102007060635
(43) Veröffentlichungstag der Anmeldung: 03.12.2008
(73) Patentinhaber: Robert Bosch GmbH, 70442 Stuttgart (DE)
(72) Erfinder: Bohn, Roland, 77815 Buehl (DE); Metz, Ulrich, 77855 Achern (DE)

(56) Entgegenhaltungen:
- WO-A1-02/06098
- DE-A1- 2 728 088
- DE-A1- 10 331 568
- FR-A1- 2 724 616

## Beschreibung

Die Erfindung bezieht sich auf eine Scheibenwischereinrichtung in einem Kraftfahrzeug nach dem Oberbegriff des Anspruches 1.

### Stand der Technik

Eine derartige Scheibenwischereinrichtung wird beispielsweise in der DE 10 2004 005 067 A1 beschrieben. Die Scheibenwischereinrichtung umfasst einen elektrischen Antriebsmotor, der zum Antrieb eines Wischerarmes mit einer Wischerlagerwelle drehgekoppelt ist. Für den Fall, dass die Scheibenwischereinrichtung als Heckscheibenwischanlage eingesetzt wird und die Heckscheibe gegenüber der Heckklappe, in der die Heckscheibe aufgenommen ist, in eine aufgeschwenkte Position zu verstellen ist, müssen der Antriebsmotor und die Wischerlagerwelle im Wischerlager in eine entkoppelte Position verstellt werden, da der Antriebsmotor üblicherweise an der Heckklappe und das Wischerlager an der Heckscheibe befestigt ist. Beim Öffnen der Heckscheibe relativ zur Heckklappe gelangen Motorwelle des Antriebsmotors und Wischerlagerwelle in eine ausgekuppelte Löseposition zueinander, beim Schließen der Heckscheibe werden die beiden Wellen wieder in eine eingekuppelte Antriebsposition verstellt. Hierbei ist darauf zu achten, dass die Motorwelle und die Wischerlagerwelle beim Schließvorgang der Heckscheibe in eine fluchtende Position zueinander gelangen. Zu berücksichtigen sind allerdings Toleranzen und Verzug in der Scheibenwischereinrichtung, der beispielsweise bei einem Schiefstehen des Fahrzeuges auftreten kann.

Die WO 0206098 A1 zeigt eine Scheibenwischereinrichtung in einem Kraftfahrzeug, die einen Wischermotor mit einer Motorwelle aufweist, welche lösbar mit einer Wischerlagerwelle zu verbinden ist, die Träger eines Wischerarms ist. Zur Überführung in eine eingekuppelte Antriebsposition zwischen Wischerlagerwelle und Motorwelle ist an der Motorwelle eine Antriebsscheibe angeordnet, die einen Zentrieraufsatz mit einer Zentrieraufnahme trägt. Die Antriebsscheibe ist fest mit der Antriebswelle verbunden. Im eingekuppelten Zustand ragt die Stirnseite der Wischerlagerwelle in die Zentrieraufnahme des Zentrieraufsatzes ein, über den die Antriebsmomente zwischen der Motorwelle und der Wischerlagerwelle übertragen werden.

Aus der FR 2 724 616 A ist eine Scheibenwischereinrichtung für ein Kraftfahrzeug bekannt, deren Motorwelle an ihrer Stirnseite ein Zentrier- und Kupplungselement zeigt, welches eine konusförmige Öffnung zur Aufnahme eines Verbindungskonus aufweist, der an der Stirnseite der Wischerlagerwelle angeordnet ist. Das Zentrierund Kupplungselement muss stabil ausgeführt und fest mit der Motorwelle verbunden sein, um die während des Betriebs entstehenden Antriebsmomente übertragen zu können.

### Offenbarung der Erfindung

Der Erfindung liegt die Aufgabe zugrunde, mit einfachen konstruktiven Maßnahmen eine gattungsgemäße Scheibenwischereinrichtung in der Weise auszubilden, dass Toleranzen und Verzug selbsttätig ausgeglichen werden und die Motorwelle und die Wischerlagerwelle problemlos in eine eingekuppelte Antriebsposition zu überführen sind.

Diese Aufgabe wird erfindungsgemäß mit den Merkmalen des Anspruches 1 gelöst. Die Unteransprüche geben zweckmäßige Weiterbildungen an.

Die erfindungsgemäße Scheibenwischereinrichtung weist einen Wischer- bzw. einen Antriebsmotor auf, dessen Motorwelle über eine Wischerlagerwelle einen Wischerarm antreibt, wobei Motorwelle und Wischerlagerwelle zwischen einer ausgekuppelten Löseposition und einer eingekuppelten Antriebsposition zu verstellen sind. Die Relativverstellmöglichkeit zwischen Motorwelle und Wischerlagerwelle eröffnet die Möglichkeit eines Einsatzes als Heckscheibenwischeranlage in Fahrzeugen, die mit einer aus der Heckklappe herauslösbaren Heckscheibe ausgestattet sind. In diesen Fällen wird der Wischermotor fest mit der Heckklappe, das Wischerlager dagegen fest mit der Heckscheibe und der Wischerarm mit der Wischerlagerwelle verbunden, so dass beim Öffnen der Heckscheibe relativ zur Heckklappe die Wischerlagerwelle in eine ausgekuppelte Löseposition gegenüber der Motorwelle gelangt und beim Schließen der Scheibe die beiden Wellen wieder in eine eingekuppelte Antriebsposition zu verstellen sind.

Um ein problemloses Einkuppeln sicherzustellen und auch Toleranzen oder Verzug beispielsweise im Falle eines Schiefstehens des Fahrzeuges ausgleichen zu können, ist gemäß der Erfindung an der Stirnseite einer der Wellen ein Zentrierelement angeordnet, welches mit einer Zentrieröffnung zum Einführen der anderen Welle bei der Überführung von der Löse- in die Antriebsposition ausgestattet ist. Die Zentrieröffnung dient als Einführöffnung für die andere Welle und sorgt für eine selbsttätige Zentrierung während der Überführungsbewegung von der Löse- in die Antriebsposition. Über die Zentrieröffnung wird ein Fangradius realisiert, innerhalb dessen die beiden Wellen trotz radialen Versatzes aufgrund von Toleranzen oder Verzugs in die richtige achsfluchtende Position zueinander gelangen.

Vorteilhafterweise trägt die Motorwelle das Zentrierelement und wird die Wischerlagerwelle in die Zentrieröffnung des Zentrierelementes eingeführt. Grundsätzlich ist es aber auch möglich, das Zentrierelement im Bereich der Stirnseite der Wischerlagerwelle anzuordnen, so dass die Spitze der Motorwelle in die Zentrieröffnung des Zentrierelementes gelangt und dadurch die fluchtende Position zur Wischerlagerwelle einnimmt.

Gemäß einer weiteren vorteilhaften Ausgestaltung ist vorgesehen, dass die das Zentrierelement tragende Welle eine stirnseitige Bohrung aufweist, in die die Stirnseite der anderen Welle einzuführen ist. Diese Bohrung nimmt in der eingekuppelten Antriebsposition die zweite Welle auf, woraufhin die Wellen eine miteinander fluchtende Position einnehmen. Das Zentrierelement und die darin angeordnete Zentrieröffnung haben die Funktion, die zweite Welle zur stirnseitigen Öffnung der ersten Welle hinzuleiten und den Einkuppelvorgang trotz Toleranzen und Verzugs zu ermöglichen.

Gemäß einer weiteren vorteilhaften Ausführung ist die das Zentrierelement tragende Welle als Hohlwelle ausgebildet. In diesem Fall ist die Bohrung als Durchgangsbohrung ausgeführt, was den Vorteil aufweist, dass sich im Gegensatz zu einer Sacklochbohrung im Inneren der Welle kein Wasser oder Schmutz ansammeln kann. Frundsätzlich ist aber auch eine Ausführung als Sacklochbohrung möglich.

Des Weiteren kann es vorteilhaft sein, dass die in das Zentrierelement einzuführende Welle einen axial überstehenden Zentrierfortsatz aufweist, der insbesondere einen kleineren Durchmesser als die Welle selbst besitzt. Dieser Zentrierfortsatz dient zum Einführen in die Bohrung der ersten Welle, wobei an der Spitze des Fortsatzes vorzugsweise eine Zentrierkugel angeordnet ist, die ein versehentliches Verkanten während des Einführens verhindert. Auch die Zentrierkugel besitzt zweckmäßigerweise einen kleineren Durchmesser als die tragende Welle.

Gemäß einer weiteren vorteilhaften Ausführung ist das Zentrierelement auf der Stirnseite der ersten Welle abgestützt, so dass auch bei einem Kontakt des Zentrierelementes durch die zweite Welle während des axialen Einführens das Zentrierelement nicht verschoben wird, sondern seine Solllage beibehält. Derartige Kraftbeaufschlagungen mit einer Komponente in Achsrichtung treten regelmäßig bei einem toleranz- oder verzugsbedingten, radialen Versatz zwischen den Achsen der Wellen auf, da in diesem Fall die in die Zentrieröffnung einzuführende Welle an einem schräg stehenden Wandabschnitt der Öffnung axial auftrifft.

Um die Kräfte in Achsrichtung, mit denen das Zentrierelement von der einzuführenden Welle beaufschlagt wird, möglichst gering zu halten, empfiehlt es sich, die die Zentrieröffnung begrenzenden Wandungen mit einem Neigungswinkel gegenüber der Wellenachse zu versehen, der zweckmäßigerweise klein ist und vorteilhafterweise nicht mehr als 30° beträgt, beispielsweise etwa 20°.

Gemäß einer weiteren vorteilhaften Ausführung ist die Zentrieröffnung als Konus ausgeführt, der sich zur Welle hin verjüngt. Die Konusform weist den Vorteil auf, dass ungeachtet der Richtung des radialen Versatzes zwischen den Wellen grundsätzlich die korrekte eingekuppelte Antriebsposition zwischen den Wellen erreicht wird.

Die Motorwelle ist vorzugsweise Träger einer Motorkurbel, über die die Drehbewegung der Motorwelle auf die Wischerlagerwelle übertragen wird. Das Zentrierelement ist zweckmäßigerweise auf der Motorkurbel angeordnet und deckt hierbei insbesondere die der zweiten Welle zugewandte Stirnseite der Motorkurbel ab.

Das Zentrierelement besteht vorzugsweise aus Kunststoff und ist insbesondere einteilig mit einer Kunststoffscheibe ausgebildet, die sich an der Stirnseite der Motorwelle befindet. Grundsätzlich ist aber auch eine zweigeteilte Ausführung möglich, also eine separate Ausbildung des Zentrierelementes von der Kunststoffscheibe.

Des Weiteren kann es zweckmäßig sein, dass der Wischermotor und/oder das Wischerlager elastisch aufgehängt sind. Dies hat den Vorteil, dass Toleranzen und Verzug beim Einführen der Welle in die Zentrieröffnung des Zentrierelementes von der elastischen Aufhängung kompensiert werden können.

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt durch eine Scheibenwischereinrichtung, die als Heckscheibenwischanlage an der Heckscheibe eines Kraftfahrzeuges angeordnet ist, wobei der Antriebs- bzw. Wischermotor und das Wischerlager zwischen einer ausgekuppelten Löseposition und einer eingekuppelten Antriebsposition verstellbar sind,
- Fig. 2: eine Darstellung einer elastischen Aufhängung, die für den Wischermotor vorgesehen ist,
- Fig. 3: eine vergrößerte Darstellung der Scheibenwischereinrichtung aus dem Bereich der miteinander in die Antriebsposition zu verbringenden Wellen,
- Fig. 4: ein konusförmiges Zentrierelement an der Stirnseite der Motorwelle in einer modifizierten Ausführung.

In den Figuren sind gleiche Bauteile mit gleichen Bezugszeichen versehen.

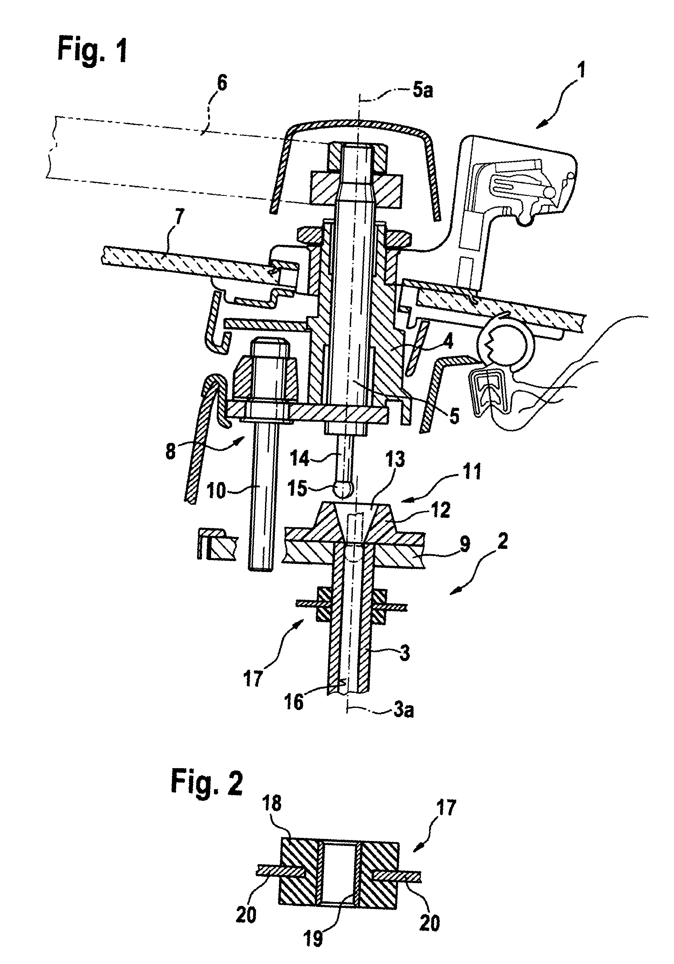

Die in Fig. 1 dargestellte Scheibenwischereinrichtung 1 wird insbesondere als Heckscheibenwischanlage in Kraftfahrzeugen eingesetzt zum Wischen einer Heckscheibe 7. Die Scheibenwischereinrichtung 1 umfasst einen elektrischen Wischer- bzw. Antriebsmotor 2 mit einer Motorwelle 3, ein Wischerlager 4 mit darin drehbar aufgenommener Wischerlagerwelle 5 sowie einen Wischerarm 6, an den ein Wischblatt zu befestigen ist, welches im fertig montierten Zustand auf der Scheibe 7 aufliegt. Die Drehbewegung der Motorwelle 3 des Wischermotors 2 wird über eine Kupplung 8 auf die Wischerlagerwelle 5 übertragen, woraufhin der Wischerarm 6 in eine pendelnde Drehbewegung versetzt wird. Die Kupplung 8 umfasst eine fest mit der Motorwelle 3 verbundene Motorkurbel 9, welche benachbart zur Stirnseite der Motorwelle 3 angeordnet ist, sowie eine Übertragungswelle 10, die im in Fig. 1 dargestellten eingekuppelten Zustand mit der Motorkurbel 9 kämmt und sich somit in der Antriebsposition verbindet. Die Drehbewegung der Übertragungswelle 10, die parallel zur Achse 5a der Wischerlagerwelle angeordnet ist, wird in eine Drehbewegung der Wischerlagerwelle übertragen.

Die Kupplung 8 kann aus der in Fig. 1 dargestellten eingekuppelten Antriebsposition in eine ausgekuppelte Löseposition verstellt werden, in der die Übertragungswelle 10 nicht mehr in Antriebsverbindung mit der Motorkurbel 9 an der Motorwelle 3 steht. In der Ausführung als Heckscheibenwischanlage eignet sich die gezeigte Scheibenwischereinrichtung insbesondere für Fahrzeuge, die eine gegenüber der Heckklappe lösbare Heckscheibe aufweisen, beispielsweise zum einfacheren Beladen des Kofferraumes. In diesem Fall ist der Wischermotor 2 einschließlich Motorwelle 3 und Motorkurbel 9 fest mit der Heckklappe verbunden, wohingegen das Wischerlager 4 sowie sämtliche mit dem Wischerlager bzw. der Wischerlagerwelle verbundene Bauteile, so auch der Wischerarm 6, fest mit der Heckscheibe 7 verbunden sind. Zum Öffnen der Heckscheibe 7 führt diese eine Relativbewegung gegenüber der Heckklappe aus; diese Relativbewegung führt zum Auskuppeln und damit zu einem Aufheben der Antriebsverbindung zwischen der Motorkurbel 9 und der Übertragungswelle 10.

Um beim Schließen der Heckscheibe einen fluchtenden Eingriff zwischen den Kupplungsteilen 9 und 10 der Kupplung 8 auch bei verhältnismäßig großen Toleranzen in der Scheibenwischereinrichtung 1 bzw. bei Verzug sicherzustellen, der beispielsweise bei einem Schiefstehen des Fahrzeuges auftreten kann, ist eine Zentriereinrichtung 11 zwischen den einander zugewandten Stirnseiten der Wellen 3 und 5 des Wischermotors 2 bzw. des Wischerlagers 4 vorgesehen. Diese Zentriereinrichtung 11 besteht aus einem Zentrierelement 12 an der Stirnseite der Motorwelle 3 und einem Zentrierfortsatz 14 an der Stirnseite der Wischerlagerwelle 5 sowie einer Zentrierkugel 15, die an der Spitze des Zentrierfortsatzes 14 angeordnet ist. Der Zentrierfortsatz 14 einschließlich der Zentrierkugel 15 ist einteilig mit der Wischerlagerwelle 5 ausgebildet. Das Zentrierelement 12 weist eine Zentrieröffnung 13 mit schrägstehenden, insbesondere konusförmigen Wandungen auf, wobei sich die Zentrieröffnung 13 zur Motorwelle 3 hin verjüngt. In die Motorwelle 3 ist eine Durchgangsbohrung 16 eingebracht, wobei der kleinste Durchmesser der Zentrieröffnung 13 an den Durchmesser der Durchgangsbohrung 16 in der Motorwelle 3 angepasst ist. Das Zentrierelement 12 ist in der Weise auf der Stirnseite der Motorwelle 3 angeordnet, dass die Zentrieröffnung 13 mit der Durchgangsbohrung 16 fluchtet, so dass die Zentrieröffnung 13 die gleiche Achse aufweist wie die Motorwellenachse 3a. Das Zentrierelement 12 ist zweckmäßigerweise aus Kunststoff gefertigt und bedeckt zumindest teilweise die Oberseite der Motorkurbel 9.

Der Durchmesser des Zentrierfortsatzes 14 sowie der Zentrierkugel 15 an der Stirnseite der Wischerlagerwelle 5 ist an den kleinsten Durchmesser der Zentrieröffnung 13 sowie der Durchgangsbohrung 16 angepasst, so dass in der eingekuppelten Antriebsposition wie in strichlierter Darstellung gezeigt die Zentrierkugel 15 sowie ein Teil des Zentrierfortsatzes 14 in der Durchgangsbohrung 16 bzw. innerhalb der Zentrieröffnung 13 angeordnet sind. Auf diese Weise befinden sich die Motorwelle 3 und die Wischerlagerwelle 5 in der eingekuppelten Antriebsverbindung in einer fluchtenden Anordnung mit koaxialen Achsen 3a bzw. 5a.

Zur elastischen Lagerung des Wischermotors 2 ist, wie Fig. 2 zu entnehmen, eine elastische Aufhängung 17 vorgesehen, die aus einem elastischen Dämpfungsring 18 und einer innen liegenden Lagerhülse 19 besteht, wobei der Dämpfungsring 18 von Haltegliedern 20 gehalten ist, z.B. einer Motorplatine. Der elastisch aufzuhängende Wischermotor ist über die Lagerhülsen 19 mit der Hecktür befestigt.

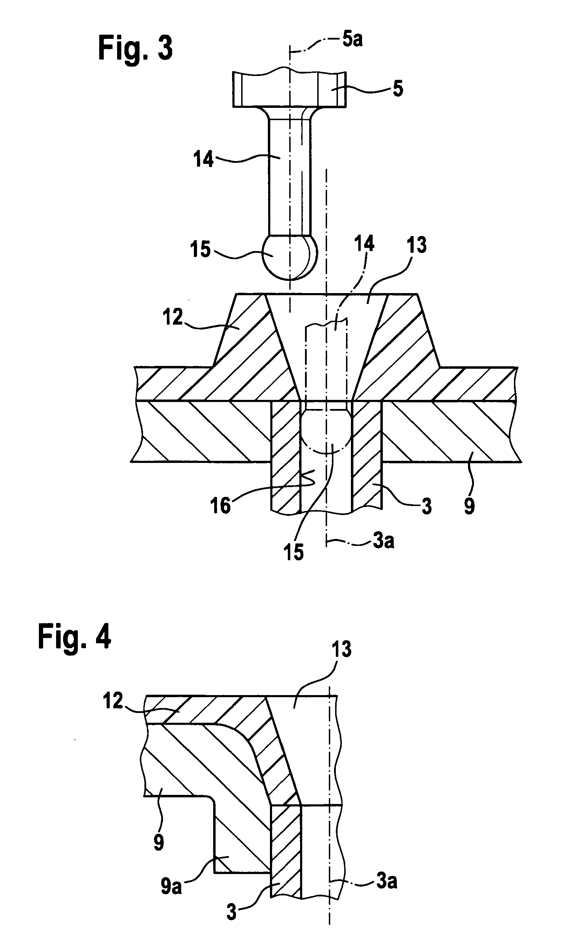

Wie der vergrößerten Darstellung gemäß Fig. 3 zu entnehmen, können die Motorwelle 3 und die Wischerlagerwelle 5 einen radialen Versatz zwischen ihren Achsen 3a bzw. 5a aufweisen. Dieser radiale Versatz wird während der axialen Einführbewegung des Zentrierfortsatzes 14 einschließlich Zentrierkugel 15 in die Zentrieröffnung 13 im Zentrierelement 12 aufgrund der Konusform der Zentrieröffnung wieder bis auf Null reduziert, so dass in der eingekuppelten Antriebsposition, die mit strichpunktierter Linie dargestellt ist, die Achsen 3a und 5a zusammenfallen. In der eingekuppelten Antriebsposition befindet sich die Zentrierkugel 15 bereits innerhalb der Durchgangsbohrung 16 in der Motorwelle 3. Der Zentrierfortsatz 14 liegt mit einem verhältnismäßig axialen Abschnitt ebenfalls in der Durchgangsbohrung 16; der größere axiale Abschnitt des Zentrierfortsatzes 14 befindet sich aber innerhalb der Zentrieröffnung 13.

Der Konuswinkel der Zentrieröffnung 13 beträgt, bezogen auf die Achse 3a, vorteilhafterweise nicht mehr als 30°, insbesondere etwa 20°.

Die axiale Stirnseite der Motorwelle 3 dient als Abstützung bzw. Anschlag für das Zentrierelement 12. Hierzu liegen die die Zentrieröffnung 13 begrenzenden Wandungen im Bereich des schmalsten, der Welle 3 zugewandten Seite unmittelbar auf der Stirnseite der Welle 3 auf.

In Fig. 4 ist eine Variante des Zentrierelementes 12 dargestellt, die sich durch eine kleinere axiale Erstreckung auszeichnet. Hierzu weist die Motorkurbel 9 benachbart zur Motorwelle 3 einen axial umgebogenen Randabschnitt 9a auf, wobei der lateral sich erstreckende Teil der Motorkurbel 9 über die Stirnseite der Motorwelle 3 axial übersteht. Das Zentrierelement 12 ist hinsichtlich seiner Form an den umgebogenen Abschnitt der Motorkurbel 9 angepasst, welche insbesondere im Übergangsbereich ebenfalls Konusform mit gleichem Konuswinkel wie die Zentrieröffnung 13 aufweist. Dadurch kann das Zentrierelement 12 überall mit einer zumindest annähernd gleichbleibenden Querschnittsdicke ausgeführt werden.

## Patentansprüche

1. Scheibenwischereinrichtung in einem Kraftfahrzeug, mit einem Wischermotor (2), dessen Motorwelle (3) über eine Wischerlagerwelle (5) einen Wischerarm (6) antreibt, wobei Motorwelle (3) und Wischerlagerwelle (5) zwischen einer ausgekuppelten Löseposition und einer eingekuppelten Antriebsposition zu verstellen sind, wobei an der Stirnseite einer Welle (3) ein Zentrierelement (12) mit einer Zentrieröffnung (13) zum Einführen der anderen Welle (5) bei der Überführung von der Löse- in die Antriebsposition angeordnet ist,
**dadurch gekennzeichnet, dass** die das Zentrierelement (12) tragende Welle (3) eine stirnseitige Bohrung (16) aufweist, in die die Stirnseite der anderen Welle (5) einführbar ist.

2. Scheibenwischereinrichtung nach Anspruch 1,
**dadurch gekennzeichnet, dass** die das Zentrierelement (12) tragende Welle (3) als Hohlwelle ausgebildet ist.

3. Scheibenwischereinrichtung nach Anspruch 1 oder 2,
**dadurch gekennzeichnet, dass** die in das Zentrierelement (12) einzuführende Welle (5) einen axial überstehenden Zentrierfortsatz (14) trägt.

4. Scheibenwischereinrichtung nach einem der Ansprüche 1 bis 3,
**dadurch gekennzeichnet, dass** an der in das Zentrierelement (12) einzuführenden Welle (5) eine stirnseitige Zentrierkugel (15) angeordnet ist.

5. Scheibenwischereinrichtung nach einem der Ansprüche 1 bis 4,
**dadurch gekennzeichnet, dass** das Zentrierelement (12) auf der Stirnseite der tragenden Welle (3) abgestützt ist.

6. Scheibenwischereinrichtung nach einem der Ansprüche 1 bis 5,
**dadurch gekennzeichnet, dass** die Zentrieröffnung (13) im Zentrierelement (12) als Konus ausgebildet ist, der sich zur Welle hin verjüngt.

7. Scheibenwischereinrichtung nach Anspruch 6, **dadurch gekennzeichnet, dass** der Konuswinkel - bezogen auf die Wellenachse (3a) - kleiner als 30° ist.

8. Scheibenwischereinrichtung nach einem der Ansprüche 1 bis 7,
**dadurch gekennzeichnet, dass** das Zentrierelement (12) als Kunststoffteil ausgeführt ist.

9. Scheibenwischereinrichtung nach einem der Ansprüche 1 bis 8,
**dadurch gekennzeichnet, dass** die das Zentrierelement (12) tragende Welle die Motorwelle (3) ist.

10. Scheibenwischereinrichtung nach Anspruch 9,
**dadurch gekennzeichnet, dass** die Motorwelle (3) eine Motorkurbel (9) trägt, wobei das Zentrierelement (12) auf der Motorkurbel (9) angeordnet ist.

11. Scheibenwischereinrichtung nach einem der Ansprüche 1 bis 10,
**dadurch gekennzeichnet, dass** die das Zentrierelement (12) tragende Welle die Wischlagerwelle (5) ist.

12. Scheibenwischereinrichtung nach einem der Ansprüche 1 bis 11,
**dadurch gekennzeichnet, dass** der Wischermotor (2) und/oder das Wischerlager (4) elastisch aufgehängt sind.

13. Scheibenwischereinrichtung nach einem der Ansprüche 1 bis 12 als Heckscheibenwischanlage.

14. Scheibenwischereinrichtung nach Anspruch 13,
**dadurch gekennzeichnet, dass** die Heckscheibe gegenüber der Heckklappe zwischen einer Schließposition und einer Öffnungsposition verstellbar ist und dass das Wischerlager (4) einschließlich der Wischerlagerwelle (5) an der Heckscheibe und der Wischermotor (2) an der Hecktür angeordnet sind.

## Claims

1. Windscreen wiper device in a motor vehicle, with a wiper motor (2), the motor shaft (3) of which drives a wiper arm (6) via a wiper bearing shaft (5), wherein motor shaft (3) and wiper bearing shaft (5) can be adjusted between a decoupled release position and a coupled driving position, and wherein the end side of one shaft (3) has a centering element (12) with a centering opening (13) for the insertion of the other shaft (5) during the transfer from the release position into the driving position, **characterized in that** the end side of the shaft (3) bearing the centering element (12) has a bore (16) into which the end side of the other shaft (5) can be inserted.

2. Windscreen wiper device according to Claim 1, **characterized in that** the shaft (3) bearing the centering element (12) is designed as a hollow shaft.

3. Windscreen wiper device according to Claim 1 or 2, **characterized in that** the shaft (5) which is to be inserted into the centering element (12) bears an axially protruding centering extension (14).

4. Windscreen wiper device according to one of Claims 1 to 3, **characterized in that** a centering bowl (15) is arranged on the end side of the shaft (5) to be inserted into the centering element (12).

5. Windscreen wiper device according to one of Claims 1 to 4, **characterized in that** the centering element (12) is supported on the end side of the bearing shaft (3).

6. Windscreen wiper device according to one of Claims 1 to 5, **characterized in that** the centering opening (13) in the centering element (12) is designed as a cone which tapers towards the shaft.

7. Windscreen wiper device according to Claim 6, **characterized in that** the cone angle - with reference to the shaft axis (3a) - is smaller than 30°.

8. Windscreen wiper device according to one of Claims 1 to 7, **characterized in that** the centering element (12) is designed as a plastics part.

9. Windscreen wiper device according to one of Claims 1 to 8, **characterized in that** the shaft bearing the centering element (12) is the motor shaft (3).

10. Windscreen wiper device according to Claim 9, **characterized in that** the motor shaft (3) bears a motor crank (9), the centering element (12) being arranged on the motor crank (9).

11. Windscreen wiper device according to one of Claims 1 to 10, **characterized in that** the shaft bearing the centering element (12) is the wiper bearing shaft (5).

12. Windscreen wiper device according to one of Claims 1 to 11, **characterized in that** the wiper motor (2) and/or the wiper bearing (4) are/is suspended elastically.

13. Windscreen wiper device according to one of Claims 1 to 12 as a rear window wiping system.

14. Windscreen wiper device according to Claim 13, **characterized in that** the rear window can be adjusted between a closed position and an open position in relation to the tail gate, and **in that** the wiper bearing (4) including the wiper bearing shaft (5) is arranged on the rear window and the wiper motor (2) is arranged on the rear door.

## Revendications

1. Dispositif d'essuie-glace dans un véhicule automobile, comprenant un moteur d'essuie-glace (2), dont l'arbre de moteur (3) entraîne un bras d'essuie-glace (6) par le biais d'un arbre de palier d'essuie-glace (5), l'arbre de moteur (3) et l'arbre de palier d'essuie-glace (5) pouvant être déplacés entre une position de libération désaccouplée et une position d'entraînement accouplée, un élément de centrage (12) étant disposé sur le côté frontal d'un arbre (3), avec une ouverture de centrage (13) pour introduire l'autre arbre (5) lors du passage de la position de libération dans la position d'entraînement, **caractérisé en ce que** l'arbre (3) portant l'élément de centrage (12) présente un alésage frontal (16) dans lequel peut être introduit le côté frontal de l'autre arbre (5).

2. Dispositif d'essuie-glace selon la revendication 1,
**caractérisé en ce que** l'arbre (3) portant l'élément de centrage (12) est réalisé sous forme d'arbre creux.

3. Dispositif d'essuie-glace selon la revendication 1 ou 2,
**caractérisé en ce que** l'arbre (5) à introduire dans l'élément de centrage (12) porte une saillie de centrage (14) saillant axialement.

4. Dispositif d'essuie-glace selon l'une quelconque des revendications 1 à 3,
**caractérisé en ce qu'**une sphère de centrage frontale (15) est disposée sur l'arbre (5) à introduire dans l'élément de centrage (12).

5. Dispositif d'essuie-glace selon l'une quelconque des revendications 1 à 4,
**caractérisé en ce que** l'élément de centrage (12) est supporté sur le côté frontal de l'arbre (3) qui le porte.

6. Dispositif d'essuie-glace selon l'une quelconque des revendications 1 à 5,
**caractérisé en ce que** l'ouverture de centrage (13) dans l'élément de centrage (12) est réalisée sous forme de cône, qui se rétrécit vers l'arbre.

7. Dispositif d'essuie-glace selon la revendication 6,
**caractérisé en ce que** l'angle de conicité - par rapport à l'axe de l'arbre (3a) - est inférieur à 30°.

8. Dispositif d'essuie-glace selon l'une quelconque des revendications 1 à 7,
**caractérisé en ce que** l'élément de centrage (12) est réalisé sous forme de pièce en plastique.

9. Dispositif d'essuie-glace selon l'une quelconque des revendications 1 à 8,
**caractérisé en ce que** l'arbre portant l'élément de centrage (12) est l'arbre de moteur (3).

10. Dispositif d'essuie-glace selon la revendication 9,
**caractérisé en ce que** l'arbre de moteur (3) porte un vilebrequin de moteur (9), l'élément de centrage (12) étant disposé sur le vilebrequin de moteur (9).

11. Dispositif d'essuie-glace selon l'une quelconque des revendications 1 à 10,
**caractérisé en ce que** l'arbre portant l'élément de centrage (12) est l'arbre de palier d'essuie-glace (5).

12. Dispositif d'essuie-glace selon l'une quelconque des revendications 1 à 11,
**caractérisé en ce que** le moteur d'essuie-glace (2) et/ou le palier d'essuie-glace (4) ont une suspension élastique.

13. Dispositif d'essuie-glace selon l'une quelconque des revendications 1 à 12, en tant qu'installation d'essuie-glace pour vitre arrière.

14. Dispositif d'essuie-glace selon la revendication 13,
**caractérisé en ce que** la vitre arrière peut être réglée par rapport au hayon arrière entre une position de fermeture et une position d'ouverture et **en ce que** le palier d'essuie-glace (4), avec l'arbre de palier d'essuie-glace (5), sont disposés sur la vitre arrière et le moteur d'essuie-glace (2) est disposé sur la portière arrière.
